# EUROPEAN PATENT APPLICATION

(11) **EP 4 529 129 A1**
(43) Date of publication of application: **26.03.2025**
(21) Application number: 23306554.9
(22) Date of filing: 20.09.2023
(51) Int. Cl.: H04L 65/1073, H04L 65/612, H04L 67/141, H04L 67/146, H04N 21/426

(54) **METHODS FOR REGISTRATION WITH A SERVER OF A MULTIMEDIA DATA DELIVERY SYSTEM AND APPARATUSES FOR IMPLEMENTING THE SAME**

(71) Applicant: ATEME, 78140 Velizy Villacoublay (FR)
(72) Inventor: OUTTERS, Jan-David, 78960 VOISINS LE BRETONNEUX (FR)
(74) Representative: Plasseraud IP

(57) **Abstract**

A method for registration with a server of a multimedia data delivery system is proposed, which comprises, by the server: receiving, from a first client configured on a first user device of the multimedia data delivery system, a request for multimedia data, the request comprising a network address of the first client; generating a client identifier based on data comprised in the received request; generating multimedia data through which the client identifier is obtainable by using the first user device through playing the multimedia data by a multimedia player configured on the first user device, and transmitting the multimedia data to the first user device; receiving, by the server, from a second client configured on a second user device, a request for registration with the server, wherein the request for registration comprises an acquired client identifier; and determining whether registration with the server is successful based on the client identifier and the acquired client identifier.

## Description

The present disclosure relates to the field of multimedia data delivery.

Media consumption is increasingly shifting from traditional broadcast TV (over-the-air, satellite, and cable) to so-called over-the-top (OTT) streaming over the public Internet. The antennas and set-top boxes associated with traditional TVs are replaced by software media players that run on smartphones, tablets, PCs, connected TVs and game consoles.

Free Ad-Supported Streaming Television (FAST) designates a set of linear streaming television services offered to users for free (without a subscription), with content being personalized for the targeted user. FAST is funded by advertising, so that users of FAST receive advertisement content in addition to their streamed multimedia content.

FAST channels allow content providers to distribute multimedia content in linear channels that are personalized to users. A live personalized channel viewing can therefore be offered to users of FAST channels.

It would be advantageous to improve the management of FAST services, so as to widen the technical frameworks in which distribution of personalized multimedia content distribution services, such as for example through FAST channels, may be offered and delivered.

There is therefore a need for providing an improved multimedia data delivery scheme and apparatus and software implementing the same that address at least some of the above-described drawbacks and shortcomings of the conventional technology in the art.

It is an object of the present subject disclosure to provide an improved multimedia data delivery scheme and apparatuses implementing the same.

Another object of the present subject disclosure is to provide an improved multimedia data delivery scheme and apparatuses implementing the same for alleviating the above-described drawbacks and shortcomings of conventional multimedia data delivery schemes.

Yet another object of the present subject disclosure is to provide an improved scheme for distribution of personalized multimedia content distribution services, such as for example through FAST channels.

Yet another object of the present subject disclosure is to provide an improved multimedia data delivery scheme in which support for FAST services may be implemented, and apparatuses implementing the same.

To achieve these objects and other advantages and in accordance with the purpose of the present subject disclosure, as embodied and broadly described herein, in one aspect of the present subject disclosure, a computer-implemented method for registration with a server of a multimedia data delivery system is proposed, which may be performed by the server, and comprises: receiving, from a first client configured on a first user device of the multimedia data delivery system, a request for multimedia data, the request comprising a network address of the first client; generating a client identifier based on data comprised in the received request; generating multimedia data through which the client identifier is obtainable by using the first user device through playing the multimedia data by a multimedia player configured on the first user device, and transmitting the multimedia data to the first user device; receiving, from a second client configured on a second user device, a request for registration with the server, wherein the request for registration comprises an acquired client identifier; and determining whether registration with the server is successful based on the client identifier and the acquired client identifier.

The proposed scheme for registration with a server of a multimedia data delivery system can advantageously be used with a first user device which is configured with a client for client-server communication with the server and a multimedia player, with no user interface configured for inputting user data to the first user device, such as, for example, a television set configured for receiving multimedia data signals. In particular, the proposed registration scheme can advantageously be used with legacy television receivers which do not implement means for executing a dedicated registration application or simply for inputting registration data for registration with a server. Instead, according to the proposed scheme, a user may input registration data, possibly including user information (such as a username, user profile information, etc.) using a second user device which is configured with a user interface for inputting registration data, such as for example a smartphone equipped with a web browser application.

The proposed scheme for registration therefore provides a solution which can be used with first and second user devices currently used by users, such as television sets and smartphones, without requiring any updating of such first and second user devices. This advantageously allows readily widely deploying the proposed solution in a transparent manner for users, in particular without requiring from users update of their user devices or purchasing of upgraded first and/or second user devices.

In addition, advantageously, according to the proposed scheme, the first user device may reuse the client identifier assigned by the server in subsequent requests presented to the server, for example once the first user device has completed the proposed registration scheme with the server, so that such requests can be personalized or customized based on an identifier which has been registered with the server. Storage into memory at the first user device of the client identifier received from the server may advantageously be performed through use of cookies in first user devices configured with a client for communicating with the server using the HTTP protocol.

According to the proposed registration scheme, a framework for presenting customized requests to a multimedia data delivery server based on an identifier registered with the server is therefore advantageously provided.

In addition, the proposed scheme may advantageously be used for managing a subscription to a service provided in the framework of the multimedia data delivery system through registration with a server of the multimedia data delivery system.

According to another aspect of the present subject disclosure, a computer-implemented method for registration with a server of a multimedia data delivery system is proposed, which may be performed by a user device of the multimedia data delivery system, and comprises: transmitting, by a client configured on the user device, to the server, a request for multimedia data, the request comprising a network address of the client; receiving, by the client, from a server configured on the server device, data comprising a client identifier; receiving, by the client, from the server, multimedia data through which the client identifier is obtainable by using the user device through playing the multimedia data by a multimedia player configured on the user device; and playing, by the multimedia player configured on the user device, the multimedia data.

In one or more embodiments, the multimedia data may be configured so that the client identifier is accessible to a user of the (first) user device through playing the multimedia data by a multimedia player configured on the (first) user device.

According to yet another aspect of the present subject disclosure, a computer-implemented method for registration of a (first) user device of a multimedia data delivery system is proposed, the method comprising, by a server device of the multimedia data delivery system, receiving, by a server configured on the server device, from a client configured on the user device, a request for multimedia data corresponding to a multimedia content, the request comprising a network address of the client; generating a client identifier based on data comprised in the received request; transmitting the client identifier to the client; transmitting, to the client, multimedia data comprising the client identifier; receiving, by the server, from a second user device, a request for registration of the client with the server, wherein the request for registration comprises a user input client identifier; and determining whether the (first) user device is registered with the server device based on the client identifier and the user input client identifier comprised in the request for registration.

According to yet another aspect of the present subject disclosure, a computer-implemented method for registration of a (first) user device of a multimedia data delivery system with a server device of the multimedia data delivery system is proposed, which may be performed by the (first) user device, and comprises: transmitting, by a client configured on the first user device, to the server device, a request for multimedia data (e.g. corresponding to a multimedia content), the request comprising a network address of the client; receiving, from a server configured on the server device, data comprising a client identifier (e.g. in response to the request); receiving, from the server device, multimedia data comprising the client identifier; playing, by a multimedia player configured on the (first) user device, the multimedia data comprising the client identifier; receiving, by a user interface of the (first) user device, a user input for registration of the user device with the server device, wherein the user input comprises a user input client identifier; generating a request for registration of the client with the server, wherein the request for registration comprises the user input client identifier; and transmitting, by the client, to the server, the request for registration.

According to yet another aspect of the present subject disclosure, a computer-implemented method for registration of a (first) user device of a multimedia data delivery system is proposed, which may be performed by a server device of the multimedia data delivery system, and comprises: receiving, from a client configured on the (first) user device, a request for multimedia data corresponding to a multimedia content, the request comprising a network address of the user device, wherein the request may be comprised in a HTTP request; generating a client identifier based on data comprised in the received request; generating cookie data that includes the client identifier; transmitting to the client a command for recording the cookie data by a HTTP client of the (first) user device; transmitting to the client image data comprising the client identifier and registration data for accessing a HTTP server of the server device for registration of the client with the server device, wherein the client identifier and the registration data are accessible to a user of the user device through displaying (e.g. automatically) the multimedia data by playing on a multimedia player of the (first) user device; receiving, from a browser of a second user device, by the HTTP server of the server device, a request for registration of the client with the server device, wherein the request for registration comprises the cookie data and a user input client identifier, wherein the request for registration may be comprised in a HTTP request; and determining whether the (first) user device is registered with the server device based on the cookie data and the client identifier comprised in the request for registration.

According to yet another aspect of the present subject disclosure, a computer-implemented method for registration of a user device of a multimedia data delivery system with a server device of the multimedia data delivery system is proposed, which may be performed by the (first) user device, and comprises: transmitting, to the server device, a channel request from a client configured on the (first) user device, the channel request comprising a network address of the user device, wherein the channel request is comprised in a HTTP request; receiving, from the server device, a command for recording cookie data by a HTTP client of the (first) user device; receiving, from the server device, multimedia data comprising a client identifier and registration data for accessing a HTTP server of the server device for registration of the client with the server device, wherein the client identifier and the registration data are accessible to a user of the user device through playing the multimedia data by a multimedia player of the user device; storing the cookie data comprising the client identifier and the registration data in a memory of a HTTP client of the user device; playing, by the multimedia player, the multimedia data comprising the client identifier and the registration data; receiving, by a user interface of the client device, a user input for registration of the user device with the client identifier, wherein the user input comprises a user input client identifier; generating, by the HTTP client of the user device, a HTTP request for registration of the client device with the server device, wherein the request for registration comprises the cookie data and the user input client identifier; transmitting, to the HTTP server of the server device, the HTTP request for registration.

In one or more embodiments, the first user device may be an end-user device configured with a client of a multimedia data delivery system and with a multimedia content player for playing video content on a display, such as for example a smartphone, tablet, SmartTV, gaming consoles, or any other end-user device configured with a client of a multimedia data delivery system and a multimedia content player, and the second user device may be an end-user device configured for data communication with the server device, such as for example a smartphone, a tablet, a gaming console, or any other mobile communication end-user device.

As another advantage of the proposed scheme, a Digital Video Broadcast-Internet (DVB-I) framework may be configured to implement the proposed scheme, so that, thanks to the proposed scheme, a user device implementing a DVB-I client may be registered with a DVB-I server. Personalization of requests from the DVB-I client may therefore be enabled in the DVB-I framework through use of a client identifier based on which the DVB-I client is registered with the DVB-I server, as proposed according to embodiments of the present subject disclosure.

In one or more embodiments, the multimedia data delivery system includes a Digital Video Broadcasting - Internet, DVB-I, system, and the query message may be a DVB-I Service List Discovery Query message to query from a DVB-I Service List Registry function a personalized list of Service List Entry Points, a DVB-I Service List Query message to query from a DVB-I Service List Server a personalized Service List, or a DVB-I Content Guide Query message to query from a DVB-I Content Guide Server personalized Content Guide Data.

In one or more embodiments, the user device may implement a Digital Video Broadcasting - Internet, DVB-I, client, and the query message may be a DVB-I query. In some embodiments, the query message may be a DVB-I Service List Query message, a Service List Discovery Query message, or a Content Guide Query message.

In one or more embodiments, the server device may implement a Digital Video Broadcasting - Internet, DVB-I, Service List Registry, SLR, function, a DVB-I Service List Server, SLS, function, or a Content Guide Server, CGS, function, and the response message may be a response message to a DVB-I Service List Discovery Query issued by a DVB-I client to the SLR function, a response message to a DVB-I Service List Query issued by the DVB-I client to the SLS function, or a response message to a DVB-I Content Guide Query issued by the DVB-I client to the CGS function, respectively.

In another aspect of the present subject disclosure, an apparatus is proposed, which comprises a processor, and a memory operatively coupled to the processor, wherein the apparatus is configured to perform a method according to one or more embodiments proposed in the present subject disclosure.

In yet another aspect of the present subject disclosure, a non-transitory computer-readable medium encoded with executable instructions which, when executed, causes an apparatus comprising a processor operatively coupled with a memory, to perform a method according to one or more embodiments proposed in the present subject disclosure, is proposed.

For example, in some embodiments, the present subject disclosure provides a non-transitory computer-readable medium encoded with executable instructions which, when executed, causes an apparatus comprising a processor operatively coupled with a memory, to perform a method for registration with a server of a multimedia data delivery system, which comprises, by the server: receiving, by the processor, from a first client configured on a first user device of the multimedia data delivery system, a request for multimedia data, the request comprising a network address of the first client; generating, by the processor, a client identifier based on data comprised in the received request; generating, by the processor, multimedia data through which the client identifier is obtainable by using the first user device through playing the multimedia data by a multimedia player configured on the first user device, and transmitting, by the processor, the multimedia data to the first user device; receiving, by the processor, from a second client configured on a second user device, a request for registration with the server, wherein the request for registration comprises an acquired client identifier; and determining, by the processor, whether registration with the server is successful based on the client identifier and the acquired client identifier.

As another example, in some embodiments, the present subject disclosure provides a non-transitory computer-readable medium encoded with executable instructions which, when executed, causes an apparatus comprising a processor operatively coupled with a memory, to perform a method for registration with a server of a multimedia data delivery system, which comprises, by a user device of the multimedia data delivery system: transmitting, by the processor, by a client configured on the user device, to the server, a request for multimedia data, the request comprising a network address of the client; receiving, by the processor, by the client, from a server configured on the server device, data comprising a client identifier; receiving, by the processor, by the client, from the server, multimedia data through which the client identifier is obtainable by using the user device through playing the multimedia data by a multimedia player configured on the user device; and playing, by the processor, by the multimedia player configured on the user device, the multimedia data.

In yet another aspect of the present subject disclosure, a computer program product comprising computer program code tangibly embodied in a computer readable medium, said computer program code comprising instructions to, when provided to a computer system and executed, cause said computer to perform a method according to an embodiment proposed in the present subject disclosure, is proposed.

In another aspect of the present subject disclosure, a data set representing, for example through compression or encoding, a computer program as proposed in the present subject disclosure, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figure 1 shows an exemplary multimedia data delivery system that may be used for implementing one or more embodiments of the present subject disclosure;
Figure 2a is a block schematic diagram illustrating an exemplary method for registration of a user device with a server according to one or more embodiments of the present subject disclosure;
Figure 2b is a block schematic diagram illustrating an exemplary method for registration of a user device with a server according to one or more embodiments of the present subject disclosure;
Figure 3a is a schematic diagram illustrating exemplary data communication exchanges between a first user device, a second user device, and a registration server according to one or more embodiments of the present subject disclosure;
Figure 3b is a schematic diagram illustrating exemplary data communication exchanges between a first user device, a second user device, and a registration server according to one or more embodiments of the present subject disclosure;
Figure 3c is a schematic diagram illustrating exemplary data communication exchanges between a first user device, a second user device, and a registration server according to one or more embodiments of the present subject disclosure;
Fig. 3d illustrates an exemplary image which includes a representation of a QR code and a Hash Id according to embodiments of the present subject disclosure;
Figure 4a illustrates an exemplary server apparatus according to one or more embodiments.
Figure 4b illustrates an exemplary client apparatus according to one or more embodiments.

### Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to devices, functions, engines, block diagrams and flowchart illustrations of the methods, devices, systems, and computer program according to one or more exemplary embodiments. Each described device, function, engine, block of the block diagrams and flowchart illustrations can be implemented in hardware, software, firmware, middleware, microcode, or any suitable combination thereof. If implemented in software, the devices, functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms "memory" and "computer storage media" include any type of data storage device, such as, without limitation, a hard drive, a flash drive or other flash memory devices (e.g. memory keys, memory sticks, key drive), CD-ROMs or other optical data storage devices, DVDs, magnetic disk data storage devices or other magnetic data storage devices, data memory components, RAM, ROM and EEPROM memories, memory cards (smart cards), solid state drive (SSD) memories, and any other form of medium able to be used to transport or store or memorize data or data structures able to be read by a computer processor, or a combination thereof. Furthermore, various forms of computer-readable media may transmit or carry instructions to a computer, such as a router, a gateway, a server, or any data transmission equipment, whether this involves wired transmission (via coaxial cable, optical fibre, telephone wires, DSL cable or Ethernet cable), wireless transmission (via infrared, radio, cellular, microwaves) or virtualized transmission equipment (virtual router, virtual gateway, virtual tunnel end, virtual firewall). According to the embodiments, the instructions may comprise code in any computer programming language or computer program element, such as, without limitation, the languages of assembler, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, and bash scripting.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs. The terms "in particular", "for example", "example", "typically" are used in the present description to denote examples or illustrations of non-limiting embodiments that do not necessarily correspond to preferred or advantageous embodiments with respect to other possible aspects or embodiments.

The terms "operationally coupled", "coupled", "mounted", "connected" and their various variants and forms used in the present description refer to couplings, connections and mountings that may be direct or indirect, and comprise in particular connections between electronic equipment or between portions of such equipment that allow operations and modes of operation as described in the present description. In addition, the terms "connected" and "coupled" are not limited to physical or mechanical connections or couplings. For example, an operational coupling may include one or more wired connection(s) and/or one or more wireless connection(s) between two or more items of equipment that allow simplex and/or duplex communication links between the equipment or portions of the equipment. According to another example, an operational coupling or a connection may include a wired-link and/or wireless coupling for allowing data communications between a server of the proposed system and another item of equipment of the system.

"Server" or "platform" in the present subject disclosure means any (virtualized or non-virtualized) point of service or computer device or system performing data processing operations, one or more databases, and/or data communication functions. For example, and without limitation, the term "server" or the term "platform" may refer to a physical processor operationally coupled to associated communication, database and data storage functions, or refer to a network, a group, a set or a complex of processors and associated data storage and networking equipment, and to an operating system and one or more database system(s) and application software supporting the services and functions provided by the server. A server or platform may be configured to operate in or as part of a cloud computing environment. A computer device or system may be configured so as to send and receive signals, via wireless and/or wired transmission networks(s), or be configured so as to process and/or store data or signals, and may therefore operate as a server. Equipment configured so as to operate as a server may thus include, by way of non-limiting example, dedicated servers mounted on a rack, cloud-based servers, desktop computers, laptop computers, service gateways (sometimes called "box" or "home gateway"), multimedia decoders (sometimes called "set-top boxes"), integrated equipment combining various functionalities, such as two or more of the abovementioned functionalities. The servers may vary greatly in terms of their configuration or their capabilities, but a server will generally include one or more central processing unit(s) and a memory. A server may also include one or more item(s) of mass memory equipment, one or more electric power supply/supplies, one or more wireless and/or wired network interface(s), one or more input/output interface(s), one or more operating system(s), such as Windows Server, Mac OS X, Unix, Linux, FreeBSD, or an equivalent.

The terms "application," "program," or "application program" (AP) and their variants ("app", "web app", etc.) as used in the present description correspond to any tool that operates and is operated by way of a computer in order to provide or execute one or more function(s) or task(s) for a user or another application program. In order to interact with an application program and control it, a user interface may be provided on the equipment on which the application program is implemented. For example, a graphical user interface (or GUI) may be generated and displayed on a screen of the user equipment, or audio content (e.g. an audio watermark) may be played back using a speaker, a headset or an audio output, for access by the user or capture by an application running on another user device.

The terms "multimedia content" as used in the present description correspond to any audio and/or video or audiovisual content, with or without closed captions, open captions, subtitles, timed text, visual descriptors, interactive graphic interfaces, and any combination thereof.

In the present description, the terms "real-time" distribution, distribution "in linear mode", distribution "in linear TV mode", distribution "in dynamic mode" and "live" distribution or distribution "in live mode" are used interchangeably to denote the distribution in live mode or dynamic mode of multimedia content in a content distribution system to user devices, comprising in particular the distribution of the content as it is generated, as opposed to distributing content previously generated, upon an access request from a user (distribution upon an access request or "static" distribution or distribution in static mode), such as for example content recorded on a server and made available to users by a video on demand (VOD) service. Multimedia content, such as for example carried by a FAST channel, may also have been previously encoded, and may be made available for distribution in linear mode to user devices on a multimedia content database.

In the present description, the terms "live content" or "live channel" are used interchangeably to denote or refer to corresponding content, for example multimedia content, of a multimedia content stream, that is distributed, for example using an Over-The-Top (OTT) distribution mode, in dynamic mode (as opposed to the static distribution mode). Live content will typically be generated by a television station, or by any type of television medium, and may also be distributed on a multimedia content broadcast network, in addition to being made available on content servers in an OTT distribution system. In some embodiments, a live channel, such as, for example, a FAST channel, may be generated from a main multimedia content flow distributed in broadcast (e.g. DVB-T/T2) combined with personalization items (e.g. personalized advertisement multimedia content) inserted in the main multimedia content flow and delivered over IP networks (in broadband).

In the present description, the terms "client", "user device", "client device", "viewing device", and "client unit" are used interchangeably to denote any type of user equipment (such as, without limitation, any computer device, smartphone, tablet, personal computer, laptop, television set, etc.) implemented by one or more items of software, one or more items of hardware, or a combination or one or more items of software and one or more items of hardware, configured to use multimedia content distributed in a multimedia data delivery system, which may in some embodiments implement one or more of generating a query message according to embodiments of the present subject disclosure, and receiving responses to such query message. A user device may typically embed a middleware/operating system on which a player is implemented. In particular, in embodiments using a DVB-I framework, a user device may typically implement a DVB-I Client (for example through its player) as defined in the DVB-I specifications and standards.

The terms "network" and "communication network" as used in the present description refer to one or more data links that may couple or connect possibly virtualized equipment so as to allow electronic data to be transported between computer systems and/or modules and/or other devices or electronic equipment, such as between a server and a user device or other types of devices, including between wireless devices that are coupled or connected via a wireless network, for example. A network may also include a mass memory for storing data, such as a NAS (network attached storage), a SAN (storage area network) or any other form of computer-readable or machine-readable medium, for example. A network may comprise, in full or in part, the Internet, one or more local area networks (LAN), one or more wide area networks (WAN), wired connections, wireless connections, cellular connections or any combination of these various networks. Similarly, subnetworks may use various architectures or conform with or be compatible with various protocols and interoperate with larger networks. Various types of equipment may be used to make various architectures or various protocols interoperable. For example, a router may be used to provide a communication link or a data link between two LANs that would otherwise be separate and independent.

The DVB Project is an industry-led consortium which develops a suite of open and interoperable specifications for the global delivery of digital media and broadcast services, known as the suite of DVB ("Digital Video Broadcast") specifications. DVB specifications cover all aspects of digital television and include DVB-Internet (DVB-I) specifications for offering standard-based solutions for the delivery of television services (live, linear and on-demand services) to internet connected devices. DVB-I can be used by a wide range of television service providers, including terrestrial broadcasters, satellite operators, cable operators, and OTT service providers.

The DVB-I standards are based on related technical specifications typically referred as BlueBooks. The DVB-I specifications provide a data format that is compatible with a large variety of devices, running from a traditional TV set and a set-top box to smartphones, tablets and laptops, thereby specifying a user interface through which common content can be provided to any internet-connected device. Included in the set of DVB-I technical specifications is the The DVB-I specification entitled "DVB-I Service Discovery - Service Discovery and Programme Metadata for DVB-I". This specification defines signalling of linear TV or radio services and content that are delivered over broadband, access to linear TV services that are delivered by broadband in a way that is consistent with their access to linear TV services delivered by RF-based DVB technologies, the metadata and mechanisms to present electronic programme guides, the integration of linear services delivered by the RF-based DVB tuner and linear services delivered by broadband into a single coherent offering that is accessed through a single consistent UI, and a method for national TV regulators or their representatives, operators and trademark licensors to offer a list of trusted/legitimate/authorized/regulated services. Its corresponding latest published standard is ETSI TS 103 770 V1.1.1, dated November 2020, while its corresponding latest BlueBook is the DVB Document A177 Rev.4 (Interim draft TS 103 770 V.1.2.1) entitled "Service Discovery and Programme Metadata for DVB-I," dated September 2022. This specification document defines *inter alia* internet-centric mechanisms to signal and discover linear television services, whether delivered over IP networks (broadband) or through broadcast mechanisms. Further details regarding this specification and corresponding standard may be found at the following URL: https://dvb.org/?standard=service-discovery-and-programme-metadata-for-dvb-i.

The proposed methods may be implemented by any (first) user device at one end, and any server device at the other end, of a multimedia data delivery system configured for exchanging multimedia data through one or more communication networks, for example in a client-server framework, through one or more client-server exchanges, such as, for example, a DVB-I client implemented in a (first) user device and a DVB-I server, compliant with DVB-I specifications or standards, whether in their existing versions and/or their evolutions, as the case may be adapted for implementing one or more embodiments of the proposed methods.

Advantageously, the proposed method may be used with any (first) user device of a multimedia data delivery system configured with a client for client-server data communication exchanges with a server of the multimedia data delivery system and with a multimedia data player for playing multimedia content received from the server, so that the proposed method does not require updating currently used user devices of multimedia data delivery systems such as television sets for purposes of implementing the proposed scheme. Instead, the proposed method can be implemented on any currently existing (first) user devices of multimedia data delivery systems, and is backward compatible with legacy (first) user devices, such as legacy television sets configured with a client for client-server data communication exchanges with a server of the multimedia data delivery system.

In particular, the proposed method can advantageously be implemented on any (first) user devices of DVB-I multimedia data delivery systems, and is backward compatible with legacy (first) DVB-I user devices, such as legacy television sets configured with a DVB-I client for client-server data communication exchanges in a DVB-I multimedia data delivery system.

Although parts of the following description focus on embodiments of the present subject disclosure in a DVB-I framework, it will be appreciated by those having ordinary skill in the relevant art that any suitable service discovery framework, or multimedia service signaling framework, may be used in place of the DVB-I framework which is given by way of example only.

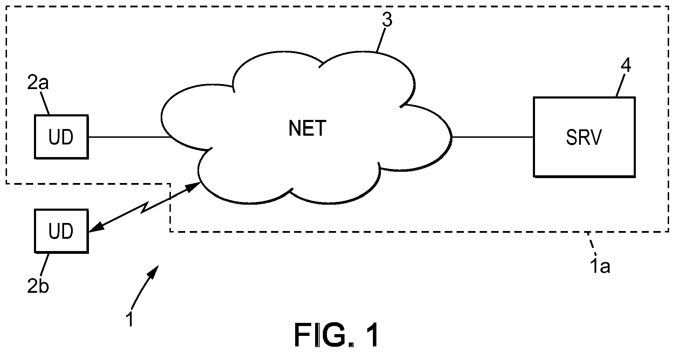

Fig. 1 illustrates an exemplary data communication system (1) according to embodiments of the present subject disclosure.

Shown on Fig. 1 is a data communication system (1) that comprises a multimedia data delivery subsystem (1a) comprising a server device (4) and user devices, including a first user device (2a), and a second user device (2b), all of which are configured for exchanging data through one or more data communication networks (3), at least one of which may be an Internet Protocol (IP) network. Depending on the embodiment, the second user device (2b) may or may not be comprised in (be a node of) the multimedia data delivery subsystem (1a).

In one or more embodiments, the first user device (2a) may be a device implementing a client function with respect to a server function implemented in the server device (4).

In one or more embodiments, the second user device (2b) may be a device implementing a HyperText Transfer Protocol (HTTP) client configured for exchanging data with a HTTP server configured on the server device (4) according to the HTTP protocol (in its past, current, or future versions). For example, the second user device (2b) may be configured with a browser application capable of operating as a HTTP client with respect to the HTTP server configured on the server device (4).

Depending on the embodiment, each of the first user device (2a), second user device (2b), and server device (4) may be implemented in software, hardware, or as a combination of software and hardware.

In one or more embodiments, the server device (4), and one or more of the first user device (2a) and the second user device (2b) may be configured to exchange data using the HTTP protocol. For example, the server device (4) may comprise a HTTP server configured for receiving HTTP requests issued by a HTTP client (e.g. implemented on one or more of the first user device (2a) and the second user device (2b)), and for responding to such HTTP requests, and one or more of the first user device (2a) and the second user device (2b) may comprise a HTTP client configured for generating HTTP requests and transmitting such HTTP requests to the server device (4). In such embodiments, one or more of the first user device (2a) and the second user device (2b), and the server device (4) may each be configured to operate as a HTTP endpoint.

In some embodiments where the server device (4) implements (may be configured with) a HTTP server, the first user device (2a) may implement (may be configured with) a HTTP client for data communications with the HTTP server of the server device (4). Depending on the embodiment, the first user device (2a) may or not be configured with a web browser, and may merely be configured with a HTTP client. For example, the first user device (2a) may be a TV device configured with a HTTP client, with no web browser application configured therein.

In one or more embodiments, the multimedia data delivery subsystem (1a) may be a DVB-I system, and the first user device (2a) (and in some embodiments the second user device (2b)) may implement a DVB-I client function, and the server device (4) may implement one or more DVB-I server functions, including for example one or more of a DVB-I Service List Registry (SLR) function and a DVB-I Service List Server (SLS) function.

In one or more embodiments, a DVB-I framework may be used for implementing the present subject disclosure.

For example, in some embodiments, one or more of the first user device (2a) and the second user device (2b) may implement a DVB-I client function, and the server device (4) may implement one or more DVB-I server functions including one or more of a DVB-I SLR function and a DVB-I SLS function, as specified in the document "DVB-I Bluebook A177r4", dated September 2022, as the case may be adapted for implementing one or more embodiments of the proposed methods. In such embodiments, the request may include a DVB-I query (such as, for example, a Service List Query or a Service List Discovery Query) issued by the DVB-I client, and the response message may be returned, depending on the embodiment, by the DVB-I SLR and may include a list of Service List Entry Points in response to a Service List Discovery Query, or by the DVB-I SLS and may include an Aggregated Service List or Service List, as described in the document "DVB-I Bluebook A177r4", dated September 2022, as the case may be adapted for implementing one or more embodiments of the proposed methods.

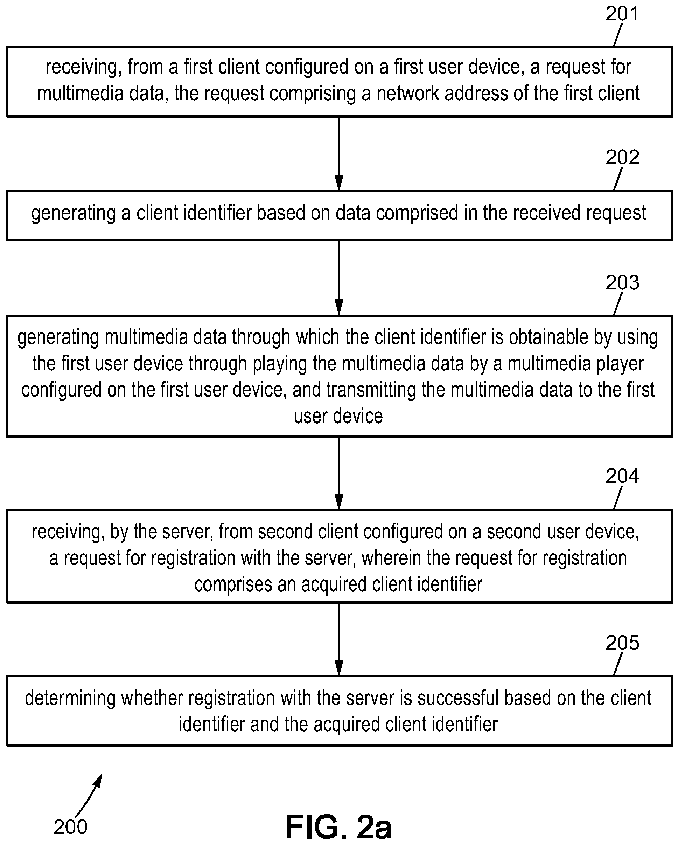

Fig. 2a is a block schematic diagram of a method (200) for registration with a server of a multimedia data delivery system according to embodiments of the present subject disclosure.

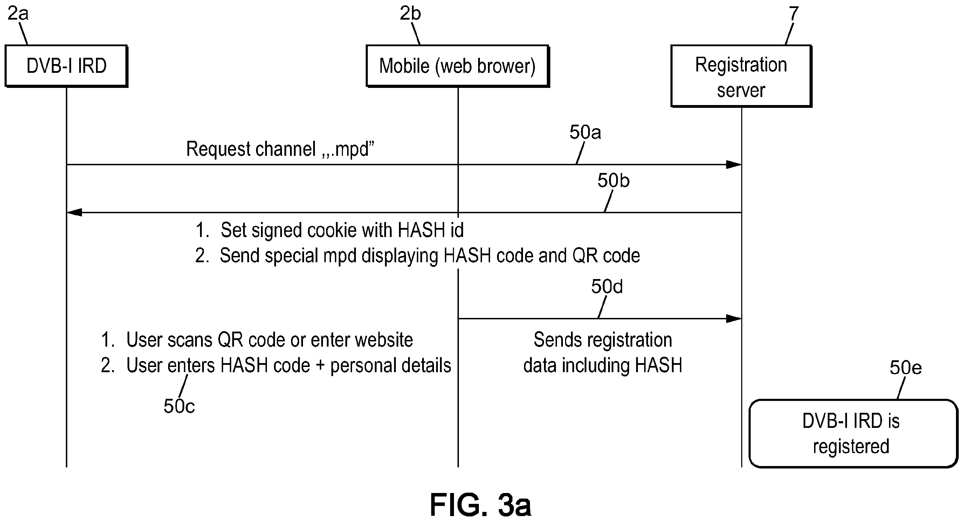

The exemplary method illustrated by Fig. 2a may advantageously be performed by a server configured on a server device of a multimedia data delivery system configured for performing the method, such as the exemplary server (4) shown on Fig 1, or the registration server (4) shown on Figs. 3a - 3c described below.

One may therefore consider for implementation of embodiments of the proposed method a multimedia data delivery system such as illustrated on Fig. 1 which comprises a first user device and a server device which may in some embodiments implement a DVB-I client function, and a DVB-I server function, respectively, or the multimedia data delivery system illustrated on Figs. 3a - 3c which also comprises a first user device (DVB-I IRD device) configured to exchange data with a DVB-I server (registration server) of the multimedia data delivery system. In particular, the first user device may implement a DVB-I client configured to use data communication (including protocols) as defined in the DVB-I technical specifications to communicate with a DVB-I server. In some embodiments, the second user device may also be configured to use data communication (including protocols) as defined in the DVB-I technical specifications to communicate with a DVB-I server.

The proposed method may advantageously be implemented on a server, such as a HTTP server (for example implemented on a DVB-I server), which may be implemented in software, hardware, or as a combination of software and hardware. In one or more embodiments, one or more operations of the proposed scheme may be implemented as one or more software programs running on a server (e.g. a Linux server).

In one or more embodiments, the server may be configured to receive (201), from a first client configured on a first user device of the multimedia data delivery system, a request (which may also be referred to herein as a query) for multimedia data (which may be corresponding to a multimedia content), which comprises a network address of the first client.

Depending on the embodiment, the request may for example comprise one or more of a request for multimedia content, and a request for metadata related to multimedia content. For example, the request may be comprised in a channel request or a content guide request.

In one or more embodiments, upon receipt of the request, the server may determine whether the first client is already registered with the server. In some embodiments, such determination may comprise determining whether the network address of the first client comprised in the received request can be found in a list of network addresses of clients registered with the server. The list of network addresses of registered clients may be stored in a storage database accessible by the server for queries.

In some cases, the server may determine that the first client is not registered with the server because the first client is no longer registered with the server (e.g. in a case where a previous registration of the first client with the server expired). In other cases, the server may determine that the first client is not registered with the server because a previous attempt of the first client to register with the server was not successful.

In one or more embodiments, reception of the request may trigger a registration process performed by the server. In some embodiments, reception of the request may trigger the registration process irrespective of whether the first client is already registered with the server (e.g. the first client previously successfully performed registration with the server), in particular in embodiments where the server is not configured to determine whether the first client is already registered with the server upon reception of a request from the first client.

In one or more embodiments, reception of the request may selectively trigger a registration process performed by the server, for example subject to determining that the first client is not already registered with the server.

In one or more embodiments, the request may comprise a network address of the first client.

Further, in some embodiments, the server and the client may be configured to use the HyperText Transfer Protocol (HTTP) protocol for client-server data communication, and the request received by the server may be a HTTP request.

For example, in some embodiments in a context wherein IP protocols are used, the server may be configured to receive a HTTP request, such as for example a "GET" HTTP request, which includes an IP address of the client device. Such may be the case for example in a DVB-I context, wherein the user device implements a DVB-I client, and the server device implements a DVB-I server: The received DVB-I query for multimedia data may be comprised in a HTTP request, such as a "GET" HTTP request.

In some embodiments in a context wherein IP protocols are used, the request for multimedia data may be a HTTP request comprising an IP address of the client from which the request originated (as network address of the first client). In some embodiments, the HTTP request may further comprise a request header, such as a User-Agent request header. A User-Agent request header includes data in the form a string based on which recipients of the request can identify the client or the user agent making the request (e.g. the application, operating system, vendor, and/or version of the requesting user agent), which may be configured in the user device. In some embodiments, the request may therefore comprise a request header, which comprises a "User-Agent" header field which can be used to identify the user-agent from which the request originated.

In such embodiments, the server device may receive a request message which comprises an IP address of the requesting user agent, and an identifier of the user agent, for example in the form of data populating a user agent field in a received HTTP request.

In one or more embodiments, the server may be configured for generating (202) a client identifier based on data comprised in the received request.

In some embodiments, the server may be configured for, upon receipt of the request for multimedia data, obtain based on the received request (for example by extracting from the request) an identifier of the first client and a network address of the first client. In such embodiments, the server may further be configured for generating, based on the identifier of the first client and the network address of the first client, a client identifier. The client identifier may therefore in some embodiments be generated based on an identifier of the first client and a network address of the first client obtained based on the request for multimedia data received from the first client.

In some embodiments, the server may further be configured for transmitting the generated client identifier to the first user device. The transmission of the client identifier to the first user device may be performed further to determining that the first user device is configured for receiving client identifier data using a suitable data communication protocol, for example based on user device capabilities of the first user device obtained by the server.

Transmitting the generated client identifier to the first user device may advantageously allow storage of the client identifier by the first user device, so that the client identifier may be included in subsequent requests presented by the first client to the server. The client identifier may therefore advantageously be stored by the first user device as registration data for subsequent use in requests to the server in order to avoid that such subsequent requests trigger a new registration process with the server. In addition, the first user device may advantageously use the client identifier in subsequent requests to the server for customizing such requests, for example by including the client identifier or registration data based thereon as a customization parameter of subsequent requests to the server.

Depending on the embodiment, the client identifier may be generated with any suitable format, such as for example a Universally Unique Identifier (UUID) or a Globally Unique Identifier (GUID) format.

In one or more embodiments, in order to reduce the size of the client identifier which is to be provided to a user of the first user device, and encode the client identifier, the server device may be configured to encode generated client identifier data using a hash algorithm, thereby producing a Hash identifier (sometimes referred herein to as a "Hash Id") as the client identifier. For example, in some embodiments, the server may be configured for applying a hash function to client identifier data generated based on an identifier of the first client and a network address of the first client obtained based on the request for multimedia data received from the first client, thereby generating a Hash Identifier based on an identifier of the first client and a network address of the first client obtained through (e.g. extracted from) the received request.

In one or more embodiments, the server may be further configured for generating data that includes the client identifier, and for transmitting to the client the generated data with a command to locally store the client identifier, possibly together with a command to include the client identifier in subsequent requests. As a consequence, the first user device may receive and store the client identifier through the first client receiving the data that includes the client identifier with the accompanying commands (which may be implicit).

For example, in some embodiments in which the first client and the server are configured to use the HTTP protocol for client-server data communication, the server may be further configured for generating one or more cookies that include the client identifier, and for transmitting to the client the generated cookie with a command to locally store the client identifier (e.g. in one or more "Set-Cookie" HTTP response headers transmitted in the response by the server to the user agent of the first client), possibly together with a command to include the client identifier in subsequent requests. As a consequence, the first user device may receive and store the client identifier through the first client receiving the data that includes the client identifier with the accompanying commands (which may be implicit).

In embodiments in which a HASH Id is generated based on the client identifier, the HASH Id may be carried in one or more cookies transmitted in a response from the server to the first client.

Depending on the embodiment, one or more of the one or more cookies carrying the client identifier may be of the session cookie type (and therefore may not specify the "Expires" or "Max-Age" attribute), or of the permanent cookie type (e.g. through one or more of an attribute "Expires" (defining a specific date at which the cookie is to be removed) and an attribute "Max-Age" (defining a length of time after which the cookie is to be removed)).

In embodiments where the data comprising the client identifier generated by the server is in the form of one or more cookies, the server may be configured for transmitting, to the first client, one or more cookies carrying the client identifier. In some embodiments, the server may be configured for transmitting, to the first client, one or more cookies carrying a HASH Id. In some embodiments, the server may be further configured for transmitting, to the first client, a command for recording the one or more cookies by a HTTP client of the first user device (such as, for example, a command of the "set cookie" type).

Use of one or more cookies for carrying the client identifier in some embodiments is advantageous in that it will be supported, at least to some extent, by the first client configured on the first user device as long as the first client is configured as a HTTP client, which is quite commonly the case, for example in any television device which implements a DVB-I client. Advantageously, implementation of a HTTP client for client-server exchanges with a server of a multimedia data delivery system can be provided at a first user device, without further requiring implementation of a web browser application or any browser application at the first user device. As a consequence, the proposed registration scheme may be performed by first user devices configured with a HTTP client, and no browser application, such as, for example, a television device configured with a DVB-I client, which will therefore be configured with a HTTP client, however not configured with any browser or specific application for performing the proposed registration scheme.

In one or more embodiments, the server may be configured for generating (203) multimedia data through which the client identifier is obtainable by using the first user device through playing the multimedia data by a multimedia player configured on the first user device, and transmitting the multimedia data to the first user device.

In one or more embodiments, the multimedia data may be generated such that the client identifier may be obtainable by a user of the first user device through playing the multimedia data by the multimedia player configured on the first user device.

In other embodiments, the multimedia data may be generated such that the client identifier may be obtainable through data acquisition by a second user device further to playing the multimedia data by the multimedia player configured on the first user device.

In one or more embodiments, the multimedia data may be generated so that registration data for accessing the server for registration with the server device (for example comprising a network address of the server, e.g. a URL of the server) is also obtainable through playing the multimedia data by a multimedia player configured on the first user device. For example, the registration data may comprise a network address of the server, or any suitable information for accessing the server in order to perform registration with the server.

Advantageously, depending on the embodiment, transmission to the first user device of the client identifier (e.g. a HASH Id) through transmission of the multimedia data allows a user of the first user device to access the client identifier through playing the multimedia data (by a multimedia player configured in the first user device) for subsequent use in a request for registration with the server, or allows data capturing by a second user device (e.g. by reading a QR code carrying the client identifier) to access the client identifier through playing the multimedia data (by a multimedia player configured in the first user device) for subsequent use in a request for registration with the server.

For example, the first user device may be configured with a video player for playing video content (e.g. frames) on a display of the first user device (the first user device may comprise a television set, a smartTV, etc.). In some embodiments, the server may transmit to the first user device video content that includes one or more frames showing the client identifier (e.g. a HASH Id). Upon receipt of the video content, the player of the first user device may display on a display the image showing the client identifier (e.g. a HASH Id), thereby making the client identifier (e.g. a HASH Id) accessible to the user through reading the client identifier displayed on the display (e.g. of the first user device) or accessible to a second user device through data acquisition of data encoding the client identifier (e.g. a QR code) displayed on the display.

In one or more embodiments, the server may be configured for generating image data through which the client identifier (e.g. a HASH Id) (in some embodiments together with registration data for accessing the server for registration of the client with the server) is obtainable by a user of the first user device (or obtainable by a second user device) through displaying the image data on a display (e.g. of the first user device), and for transmitting the image data to the client.

In some embodiments, the first user device may be configured with a multimedia player and a display for displaying multimedia data. For example, the first user device may be a television, and the multimedia data may be displayed on the television display, through which the client identifier (and, in some embodiments, the registration data for accessing the server) may be accessed by the user. For example, in some embodiments, the client identifier may take the form of a hash code transported in video content to be displayed on a screen (e.g. of the first user device), in one or more format including a human readable format and an encoded format (e.g. in a QR code).

In some embodiments, the first user device may be configured with a multimedia player and an audio output for playing an audio part of the multimedia data. For example, the first user device may be a television, and the multimedia data may be played by a television speaker, through which the client identifier (and, in some embodiments, the registration data for accessing the server) may be accessed by the user or captured by a sensor of a second user device configured with a suitable application. For example, in some embodiments, the client identifier may take the form of a hash code transported in audio content (e.g. an audio watermark) playable on a speaker (e.g. of the first user device) for access by the user or capture by a sensor (e.g. a microphone) of a second user device configured with a suitable application. Use of a hash code transported in an audio watermark may advantageously be more lightweight in terms of processing and generating than use of a hash code transported in video content. In some embodiments, the audio watermark may be played alongside with a generic video by a player of the first user device.

Once the client identifier (possibly with registration data for accessing the server) has been accessed (for example, depending on the embodiment, through reading or hearing by a user, and/or through data acquisition by a second user device) through the multimedia data played on the first user device, the acquired data (client identifier, possibly together with the registration data for accessing the server) may be used to issue, by a second user device, a request for registration (of a second client configured on the second user device) with the server. The request for registration transmitted to the server may include the acquired client identifier.

In some embodiments, the second user device may be a mobile device (e.g. a smartphone, a tablet, etc.).

In one or more embodiments, once the client identifier (possibly with registration data for accessing the server) has been accessed by the user through the multimedia data played on the first user device, the user may use the acquired data (client identifier, possibly together with the registration data for accessing the server) to issue, on the second user device, a request for registration to the server. In particular, the user may use a user interface configured on the second user device to input the acquired client identifier so that the request for registration transmitted to the server includes the acquired client identifier.

In one or more embodiments, the second user device may be configured for, once the client identifier (possibly with registration data for accessing the server) has been acquired through data acquisition using sensors of the second user device through the multimedia data played on the first user device, using the acquired data (client identifier, possibly together with the registration data for accessing the server) to issue a request for registration to the server. The second user device may be further configured to, possibly using user input, include the acquired client identifier in the request for registration transmitted to the server.

Correspondingly, in one or more embodiments, the server may receive (204), from a second client configured on the second user device, a request for registration with the server which comprises the acquired client identifier.

In some embodiments, the request for registration of the client may be comprised in a HTTP request generated by a HTTP client (e.g. through a web browser application) configured on the second user device.

In some embodiments, the acquired client identifier comprised in the request for registration may be based on a user input client identifier input by the user based on the data obtained through playing the multimedia data on the first user device.

In some embodiments, the acquired client identifier comprised in the request for registration may be generated by the second user device based on data acquisition (using sensors of the second user device, such as a microphone or a camera) on the multimedia data played on the first user device.

Therefore, depending on the embodiment, the acquired client identifier may be one or more of data acquired by a user and data acquired by the second user device, in each case based on the multimedia data played by the first user device.

In one or more embodiments, the server may be configured for determining (205), upon reception of the request for registration, whether registration with the server is successful based on the client identifier and the acquired client identifier.

In some embodiments, the server may be configured for determining whether the client identifier and the acquired client identifier correspond to each other. For example, in some embodiments, the server may determine that the client identifier and the acquired client identifier correspond to each other by calculating a distance between the client identifier and the acquired client identifier, and comparing the distance with a predefined threshold.

In some embodiments, in cases where the server determines that the registration with the server is successful, the server may add the client identifier, possibly with in a list of registered clients stored in a memory accessible to the server (e.g. a registration database that can be queried by the server), possibly together with data related to one or more of the first user device, second user device, and the user received during the registration process (e.g. a network address of the first client, a network address of the second client, user agent data of the first user device, user agent data of the second user device, a user profile, a username, a user login, a user alias, personal information of the user, financial information for the user, etc.). In some embodiments, the server may transmit to one or more of the first user device and the second user device a successful registration message, using any suitable data communication scheme.

In some embodiments, in cases where the server determines that the registration with the server is not successful, the server may transmit to one or more of the first user device and the second user device a registration failure message, using any suitable data communication scheme.

In embodiments of the proposed method in a DVB-I framework, the server may implement a DVB-I server (thereby implementing a HTTP server), and the first user device may implement a DVB-I client (thereby implementing a HTTP client). In such embodiments, the DVB-I server may be configured to receive, from the DVB-I client of the first user device, DVB-I requests for multimedia data, for example a channel request. The DVB-I server may further be configured for, upon receipt of a request for multimedia data, obtain based on the received request (for example by extracting from the request) an identifier of the HTTP client. For example, the DVB-I server may be configured for obtaining, based on the request, an identifier and a network address of the HTTP client, and for generating, based on the HTTP client identifier and the network address of the HTTP client, a client identifier. In some embodiments, the DVB-I server may further be configured for applying a hash function to generated client identifier data, thereby generating a Hash Identifier based on the HTTP client identifier and the network address of the HTTP client.

In some embodiments, the HTTP server may send the client identifier (in some embodiments the Hash Identifier) to the HTTP client using one or more cookies generated by the HTTP server. For example, the HTTP server may be configured to generate a cookie comprising the client identifier (in some embodiments the Hash Identifier), and send this cookie to the HTTP client, for example in a response message to the received request.

In some embodiments, the HTTP server may send to the HTTP client a cookie containing a Hash Identifier generated for the HTTP client, which may be used as an identifier of the first client device for performing subsequent operations of the proposed registration scheme. In some embodiments, the cookie may be sent with a HTTP "set-cookie" command so that the data carried by the cookie, including the client identifier (in some embodiments the Hash Identifier) may be recorded in memory of the first user device upon receipt.

Using a cookie in the registration of the first user device advantageously allows leveraging the fact that data comprised in the cookie (including the client identifier), once received and stored by the first user device, will be included in subsequent requests to the server which will embed the cookie, thereby allowing the customizing of subsequent requests to the server based on the client identifier. For example, once the first user device has stored a cookie containing its client identifier assigned by the server, the requests that are presented by the first client to the server may advantageously comprise the cookie and therefore the client identifier. At the server end, upon successful completion of the registration process with the client identifier, the server may record in a database the client identifier, possibly with other data related to the user provided during the registration process, and the server may be configured for handling subsequent requests which include the registered client identifier (from the first client) in a specific manner, for example by handling such requests as customized by the client identifier.

In one or more embodiments, the server device of the multimedia data delivery system may be configured to receive, by a server configured on the server device, from a client configured on the (first) user device, a request (which may also be referred to herein as a query) for multimedia data (which may be corresponding to a multimedia content). Depending on the embodiment, the request may for example comprise one or more of a request for multimedia content, and a request for metadata related to multimedia content. For example, the request may be comprised in a channel request or a content guide request. In one or more embodiments, the request may comprise a network address of the (first) user device. In one or more embodiments, the server device may be configured for, upon receiving the request, generating a client identifier based on data comprised in the received request, and for transmitting the client identifier to the first user device. In one or more embodiments, the server may be configured for generating multimedia data through which the client identifier is obtainable by a user of the first user device through playing the multimedia data by a multimedia player configured on the first user device, and transmitting the multimedia data to the first user device.

In one or more embodiments, the multimedia data may be generated so that registration data for accessing the server for registration of the first user device with the server device through registration of the client with the server is also obtainable through playing the multimedia data by a multimedia player configured on the first user device. For example, the registration data may comprise a network address of the server, or any suitable information for accessing the server in order to perform registration with the server. In one or more embodiments, the server may receive, from a second user device, a request for registration of the client with the server. In some embodiments, the request for registration may comprise a user input client identifier input by the user based on the data obtained through playing the multimedia data on the first user device. In one or more embodiments, the server device may be configured for determining, based the client identifier and the user input client identifier comprised in the request for registration, whether the first user device is registered with the server device (through registration of the client with the server).

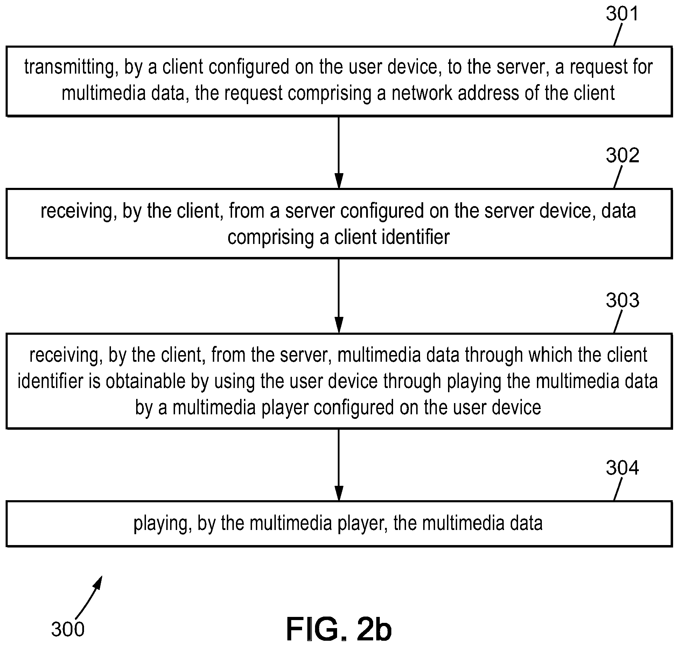

Fig. 2b is a block schematic diagram of a method (300) for registration with a server of a multimedia data delivery system according to embodiments of the present subject disclosure.

The exemplary method illustrated by Fig. 2b may advantageously be performed by a client of a (first) user device of a multimedia data delivery system configured for performing the method, such as a client configured on the exemplary first user device (2a) shown on Fig 1, or the DVB-I IRD (client) device (2a) shown on Figs. 3a - 3c described below.

One may therefore consider for implementation of embodiments of the proposed method a multimedia data delivery system such as illustrated on Fig. 1 which comprises a first user device and a server device which may in some embodiments implement a DVB-I client function, and a DVB-I server function, respectively, or the multimedia data delivery system illustrated on Figs. 3a - 3c which also comprises a first user device (DVB-I IRD (client) device) configured to exchange data with a DVB-I server (registration server) of the multimedia data delivery system. In particular, the first user device may be configured with a client configured to use data communication (including protocols) as defined in the DVB-I technical specifications to communicate with a DVB-I server. In some embodiments, the second user device may also be configured with a client configured to use data communication (including protocols) as defined in the DVB-I technical specifications to communicate with a DVB-I server.

In some embodiments, the proposed method may advantageously be implemented on a user device implementing a client function, such as a HTTP client or a DVB-I client, which may be implemented in software, hardware, or as a combination of software and hardware. In one or more embodiments, one or more operations of the proposed scheme may be implemented as a software program running on a user device.

In one or more embodiments, the (first) client configured on the (first) user device may be configured for transmitting (301), to the server, a request for multimedia data, the request comprising a network address of the (first) client.

In one or more embodiments, the (first) client may receive (302) from the server, data comprising a client identifier. In some embodiments, the data comprising the client identifier may be comprised in a response sent by the server to the request from the (first) client.

In some embodiments, the data comprising the client identifier received by the client may take the form of a Hash code (sometimes referred to herein as a "HASH Id" or a "HASH Identifier").

In some embodiments, the client identifier may be received by the (first) client through one or more cookies received by the (first) client.

In embodiments in which the client identifier received by the client takes the form of a HASH Id, the (first) client may receive the HASH Id carried in one or more cookies.

In some embodiments, the (first) client may be configured with a HTTP client configured for interacting with the server using the HTTP protocol according to embodiments of the present subject disclosure. In some embodiments, the HTTP client of the (first) client may store one or more cookies carrying the client identifier (e.g. a HASH Id) upon receipt.

In embodiments where the data comprising the client identifier received by the (first) client is in the format of one or more cookies, the (first) client may be configured for receiving one or more cookies carrying the client identifier. In some embodiments, the (first) client may be configured for receiving one or more cookies carrying a HASH Id. In some embodiments, the (first) client may be further configured for receiving a command for recording the one or more cookies in a memory of the first user device (such as, for example, a command of the "set-cookie" type).

In one or more embodiments, the (first) client may be configured for receiving (303), from the server, multimedia data through which the client identifier is obtainable by using the first user device through playing the multimedia data by a multimedia player configured on the first user device.

In one or more embodiments, the (first) client may further be configured for, upon receipt of the multimedia data, playing (304), by the multimedia player configured on the user device, the multimedia data.

For example, depending on the embodiment, the client identifier transported through multimedia data may be transported in video content or in an audio watermark.

In one or more embodiments, the (first) client may be configured for receiving image data through which the client identifier (e.g. a HASH Id) (in some embodiments together with registration data for accessing the server for registration of the client with the server) is obtainable through displaying the image data on a display (e.g. of the (first) user device), for example by reading by a user or by data capturing by a second user device configured with an image capture sensor.

In some embodiments, the (first) user device may be configured with a multimedia player and a display for displaying multimedia data. For example, the (first) user device may be a television, and the multimedia data may be displayed on the television display, through which the client identifier and, in some embodiments, registration data for accessing the server (e.g. a network address of the server), may be accessed, for example by reading by a user or by data capturing by a second user device configured with an image capture sensor.

In the following, exemplary use cases are described for illustrating various embodiments of the present subject disclosure.

Fig. 3a is a schematic diagram of messages exchanged between a registration server and first and second user devices according to embodiments of the present subject disclosure. The server device and the first user device may be configured to be nodes of a multimedia data delivery system, which may include a DVB-I multimedia data delivery network. The data communication between the registration server and the user devices may for example take place between the first user device (2a), the second user device (2b), and the server device (4) illustrated on Fig. 1.

As shown on Fig. 3a, the first user device (2a) may be configured with a DVB-I client function. For example, the user device may be configured as a DVB-I Integrated Receiver/Decoder (IRD) device (which may also be referred to herein as a "DVB-I client device").

The second user device may be any user device configured for data communication with the server, for example according to the HTTP protocol. For example, the second user device may be any mobile device (smartphone, tablet, etc.) configured with a web browser.

As shown on Fig. 3a, in one or more embodiments, the DVB-I client may transmit (50a) to the registration server a channel request message, for example - depending on the embodiment - in the form of a request for a MPEG-DASH Media Presentation Description (MPD) manifest file, a playlist, or a channel associated image.

In some embodiments, the channel request message may be first transmitted to a server different from the registration server in the multimedia content distribution system, and reception of the channel request message may trigger in the multimedia content distribution system a registration process according to a proposed method of the present subject disclosure. For example, the channel request message (or a registration request message generated based on the received channel request message) may be forwarded to the registration server so that a registration process as proposed in the present subject disclosure may be performed with the registration server for registration of the first user device.

In one or more embodiments, the registration server may be configured for processing the received request message (which may, as shown on Fig. 3a, be comprised in a channel request message) as a request for registration of the first user device from which the request message originated.

In some embodiments, processing the received request by the registration server may comprise obtaining, based on the received request, a network address of the user device from which the request message originated.

For example, in some embodiments, the request message may be comprised in a HTTP request, such as for example a "GET" HTTP request, which includes an IP address of the first user device, and the registration server may process the received HTTP request to extract the IP address of the first user device therefrom.

In some embodiments, processing the received request by the registration server may further comprise generating an identifier associated with the user device from which the request originated, based on data comprised in the received request.

For example, in embodiments where the request message is comprised in a HTTP request, the registration server may generate the identifier based on data comprised in the header of the HTTP request (e.g. based on data comprised in the "User-Agent" field of the header).

In one or more embodiments, the registration server may generate cookie data (e.g. a cookie) that includes the identifier, and transmit the generated cookie data to the first user device based on the previously obtained network address of the first network device. The cookie data may comprise a HTTP cookie, and may be sent to a HTTP browser configured on the first user device from which the HTTP request originated, with a (explicit or implicit, depending on the embodiment) request to store the cookie data in a memory of the first user device.

In such embodiments, the first user device may be configured to perform processing functions on cookie data (which may, depending on the embodiments, include one or more of, or be limited to receive, delete, send, and store cookie data), for example through a HTTP browser or a HTTP client configured with some cookie processing functions. Such capabilities may be implemented in the first user device in software, for example in a javascript or an application environment. However, the skilled person would understand that in some embodiments the first user device may be configured with a HTTP client and capabilities to perform processing functions on cookie data (which may, depending on the embodiments, include one or more of, or be limited to receive, delete, send, and store cookie data), without necessarily implementing an HTTP browser configured for receiving user input.

For example, in some embodiments, the registration server may set the generated cookie data at the first user device through a "Set-Cookie" header field in a HTTP response sent to the first user device, in order to instruct the HTTP browser of the first user device to store the cookie and to send the cookie back in future requests to the registration server.

Depending on the embodiment, the cookie data may be data having any suitable format in order to be processed by a HTTP client of the first user device from which the request originated. For example, the cookie data may be comprised in a text file, and may comprise a string of characters (which may typically comprise a cookie name, a cookie value, and possibly one or more cookie attributes (in the form of name/value pair, for storing information such as the cookie's expiration, domain, and flags).

In one or more embodiments, cookie data generated by the registration server based on the HTTP request received from the first user device may be of the HTTP authentication cookie type.

In one or more embodiments, the registration server may generate a signed cookie, that is, a cookie with a "Signed" attribute set to "TRUE," in order to inform the first user device that the data carried by the cookie (the identifier, which will be used to request registration) can be trusted by the first user device.

Advantageously, in some embodiments, the registration server may reduce the size of the data carried by the cookie by generating a hash code of the identifier (sometimes referred to herein as a "HASH identifier" or a "HASH Id"), and generating a signed cookie carrying the HASH Id. The signed cookie carrying the HASH Id may then be transmitted (50b) to the first user device with a set cookie command to instruct the HTTP client of the first user device to store the HASH Id in memory.

Using a HASH Id of reduced size as compared to an identifier obtained based on a received request advantageously reduces the amount of memory used at the registration server for registration of one user device, as the registration server may maintain a database of registered user devices for a potentially very large number of user devices.

In one or more embodiments, the registration server may be further configured to generate multimedia data which comprises the identifier (e.g. the HASH Id) and registration data for accessing the HTTP server of the registration server for registration of the first user device with the registration server through registration of the HTTP client of the first user device with the HTTP server of the registration device.

In some embodiments, the registration data may comprise a network address of the registration server, such as, for example, a URL or a web address of the HTTP server of the registration server.

The generated multimedia data may in some embodiments comprise image data, preferably in a format that can be played by a player configured on the first user device by being displayed on a display unit of the first user device. In such embodiments, the identifier and registration data are made available to a user of the first user device by image data being displayed on a display of the first user device.

In embodiments where the registration data are made available to a user of the first user device by image data being displayed on a display of the first user device, the registration data may be displayed in the form of a QR code being displayed with the identifier on a display of the first user device. The QR code may be configured to encode a URL or a web address of the HTTP server of the registration server which are read upon scanning of the QR code. In some embodiments, a URL or a web address of the HTTP server of the registration server may be displayed as registration data provided to the user.

As shown in Fig. 3a, in some embodiments, the registration server may transmit (50b) to the first user device image data (e.g. in the form of a MPD file) which contains an image representation of a QR code (corresponding to the registration data) and a HASH Id.

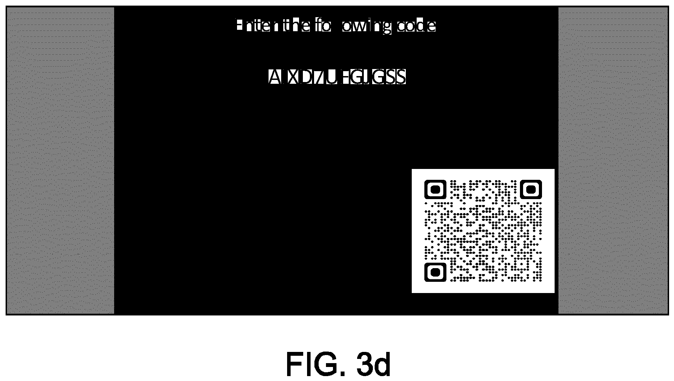

Fig. 3d illustrates an exemplary image which includes a representation of a QR code and a Hash Id (in the example, "AIXD7UFGJGSS") according to embodiments of the present subject disclosure. The QR code shown on Fig. 3d may be configured for, upon scanning for decoding, representing a web address (a URL) of the HTTP server.

Advantageously, upon receipt of the image data, and display of the QR code and the HASH Id on a display of the first user device, a user may scan the QR code to access the server of the registration server, and use the HASH Id for generating a request for registration with the server.

In one or more embodiments, the user may use a second user device, such as for example a smartphone, to access the registration server and generate a request for registration based on the identifier. For example, in some embodiments, the user may use a second user device to scan the QR code displayed on a display of the first user device, and obtain an address (e.g. a URL) of the server. In other embodiments, the user may read a web address of the HTTP server displayed on the display of the first user device, and enter the web address on a web browser configured on the second user device for accessing the HTTP server of the registration server.

In one or more embodiments, the user may enter a user input client identifier corresponding to the HASH Id, possibly together with other data regarding user information, through a user interface configured on the second user device, and the second user device (2b) may be configured for generating a request for registration which comprises the user input client identifier, and for transmitting (50d) the request for registration to the HTTP server.

In some embodiments, the user may input the user input client identifier to the second user device through a web browser application configured on the second user device, so that advantageously, in such embodiments, the proposed method does not require use at the second user device of a specific registration application configured for user populating a user input client identifier and generating a request for registration based thereon. Instead, for example in embodiments where the second user device is a smartphone, the user may simply use the browser application configured on the smartphone in order to access a web page provided by the server configured with a user interface for inputting the user input client identifier and requesting registration with the server based thereon.

In one or more embodiments, upon receipt of the request for registration, the registration server may determine whether the user input client identifier comprised in the request for registration corresponds or not to the identifier (e.g. the HASH Id) that was transmitted to the first user input through the cookie data.

In a case where the registration server determines that the user input client identifier comprised in the request for registration corresponds to the identifier (e.g. the HASH Id) that was transmitted to the first user input through the cookie data, the registration server may determine (50e) that the first user device is successfully registered. In some embodiments, the registration server may transmit a successful registration message to one or more of the first user device and the second user device.

In a case where the registration server determines that the user input client identifier comprised in the request for registration does not correspond to the identifier (e.g. the HASH Id) that was transmitted to the first user input through the cookie data, the registration server may determine that the first user device is not successfully registered. In some embodiments, the registration server may transmit a registration failure message to one or more of the first user device and the second user device.

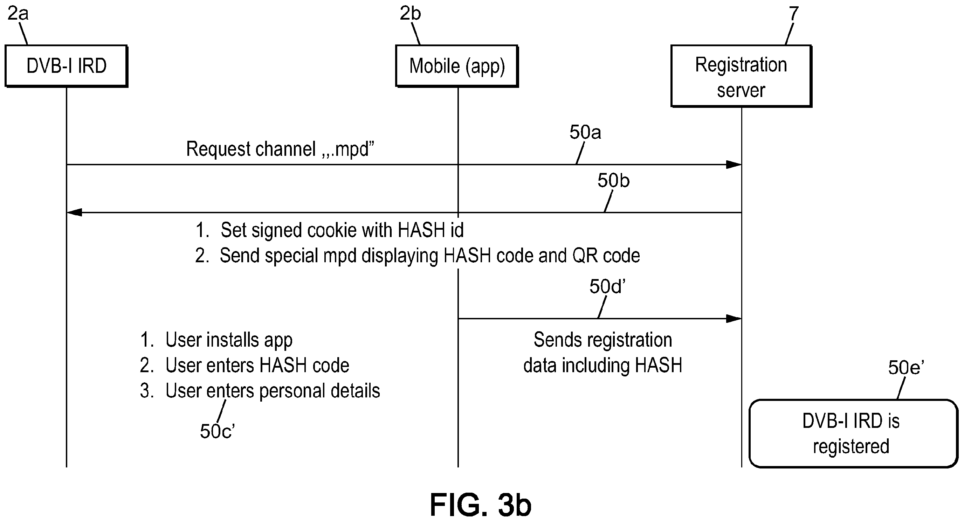

Fig. 3b is a schematic diagram of messages exchanged between a registration server and first and second user devices according to embodiments of the present subject disclosure. The server device and the first user device may be configured to be nodes of a multimedia data delivery system, which may include a DVB-I multimedia data delivery network. The data communication between the registration server and the user devices may for example take place between the first user device (2a), the second user device (2b), and the server device (4) illustrated on Fig. 1.

As shown on Figs. 3a and 3b, the first user device (2a) may be configured with a DVB-I client function. For example, the user device may be configured as a DVB-I Integrated Receiver/Decoder (IRD) device. In contrast with the embodiments illustrated by Fig. 3a, Fig. 3b illustrates embodiments in which the second user device is configured with a dedicated registration application.

As shown on Figs. 3a and 3b, data exchanges between the first user device and the registration server in the embodiments illustrated on Fig. 3b may correspond to that illustrated on Fig. 3a and described above. Reference is therefore made to the above description with respect to these data exchanges (50a, 50b) between the first user device and the registration server.

In one or more embodiments, the second user device may be configured with a registration application, such as for example a mobile application in embodiments where the second user device is a mobile device (e.g. a smartphone or a tablet).

The registration application may be configured with a user input interface (e.g. a Graphical User Interface) configured for receiving user input data entered by the user.

In one or more embodiments, the user may obtain the client identifier through the multimedia data played on the first user device. For example, the user may obtain a HASH Id which is displayed on a display of the first user device through image data (such as a video frame) displayed on the first user device.

In one or more embodiments, the second user device may capture the client identifier through the multimedia data played on the first user device. For example, the second user device may capture a HASH Id which is displayed on a display of the first user device through image data (such as a video frame) displayed on the first user device, or through audio content (e.g. an audio watermark) played by a loudspeaker of the first user device that includes HASH Id data.

Depending on the embodiment, the HASH Id may be displayed on the display through any suitable manner, including display of a readable HASH Id and through a QR code displayed on the display.

In one or more embodiments, the user may install the registration application on the second user device, and execute the registration application. The user may then enter (50c') a user input client identifier that corresponds to the client identifier (e.g. the HASH Id) through a user input data interface configured in the application, possibly with other data related to the user (e.g. a user name, an alias, etc.).

In some embodiments, the registration application may be configured for, upon receipt of the client identifier inputted by the user, generating a request for registration which comprises the user input client identifier, and for transmitting (50d') the request for registration to the HTTP server.

In embodiments where data related to the user are provided by the user for purposes of registration with the registration server, such data may be available for generating the request for registration, which may therefore viewed as non-anonymous.

In one or more embodiments, upon receipt of the request for registration, the registration server may determine whether the user input client identifier comprised in the request for registration corresponds or not to the client identifier (e.g. the HASH Id) that was transmitted to the first user input through the cookie data.

In a case where the registration server determines that the user input client identifier comprised in the request for registration corresponds to the client identifier (e.g. the HASH Id) that was transmitted to the first user input through the cookie data, the registration server may determine (50e') that the first user device is successfully registered. In some embodiments, the registration server may transmit a successful registration message to one or more of the first user device and the second user device.

In a case where the registration server determines that the user input client identifier comprised in the request for registration does not correspond to the client identifier (e.g. the HASH Id) that was transmitted to the first user input through the cookie data, the registration server may determine that the first user device is not successfully registered. In some embodiments, the registration server may transmit a registration failure message to one or more of the first user device and the second user device.

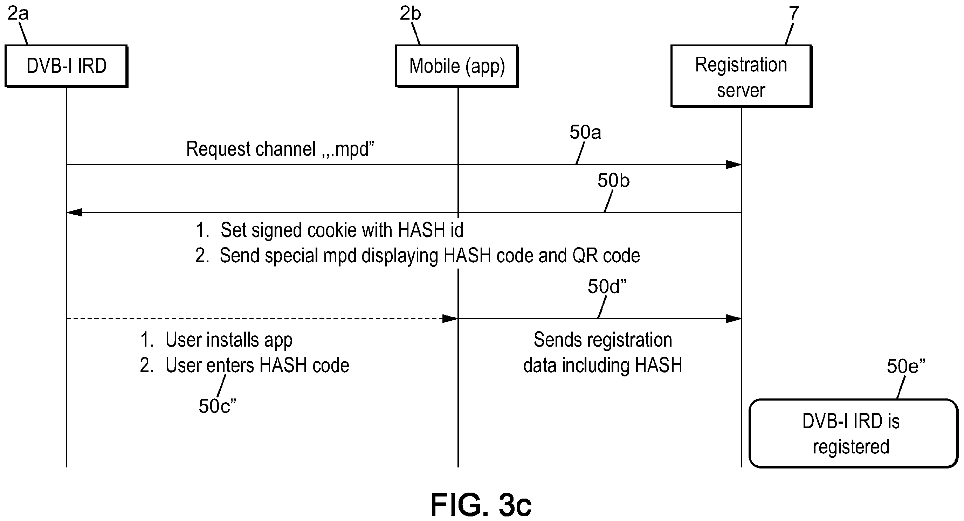

Fig. 3c is a schematic diagram of messages exchanged between a registration server and first and second user devices according to embodiments of the present subject disclosure. The server device and the user devices may be configured to be nodes of a multimedia data delivery system, which may include a DVB-I multimedia data delivery network. The data communication between the registration server and the user devices may for example take place between the first user device (2a), the second user device (2b), and the server device (4) illustrated on Fig. 1.

As shown on Figs. 3a, 3b and 3c, the first user device (2a) may be configured with a DVB-I client function. For example, the user device may be configured as a DVB-I client device. In contrast with the embodiments illustrated by Fig. 3a, Fig. 3c also illustrates embodiments in which the second user device is configured with a dedicated registration application.

As shown on Figs. 3b and 3c, data exchanges between the first user device and the registration server, and between the second user device and the registration server, in the embodiments illustrated on Fig. 3c may correspond to that illustrated on Fig. 3b and described above. Reference is therefore made to the above description with respect to these data exchanges (50a, 50b) between the first user device and the registration server.

In one or more embodiments, the second user device may be configured with a registration application, such as for example a mobile application in embodiments where the second user device is a mobile device (e.g. a smartphone or a tablet).

The registration application may be configured with a user input interface (e.g. a Graphical User Interface) configured for receiving user input data entered by the user.

In one or more embodiments, the user may obtain the client identifier through the multimedia data played on the first user device. For example, the user may obtain a HASH Id which is displayed on a display of the first user device through image data (such as a video frame) displayed on the first user device.

In one or more embodiments, the second user device may capture the client identifier through the multimedia data played on the first user device. For example, the second user device may capture a HASH Id which is displayed on a display of the first user device through image data (such as a video frame) displayed on the first user device, or through audio content (e.g. an audio watermark) played by a loudspeaker of the first user device that includes HASH Id data.

Depending on the embodiment, the HASH Id may be displayed on the display through any suitable manner, including display of a readable HASH Id and through a QR code displayed on the display.

In one or more embodiments, the user may install the registration application on the second user device, and execute the registration application. The user may then enter (50c") a user input client identifier that corresponds to the client identifier (e.g. the HASH Id) through a user input data interface configured in the application, without including data related to the user (e.g. a user name, an alias, etc.).

In some embodiments, the registration application may be configured for, upon receipt of the client identifier inputted by the user, generating a request for registration which comprises the user input client identifier, and for transmitting (50d") the request for registration to the HTTP server.

In embodiments where no data related to the user are provided by the user for purposes of registration with the registration server, no such data may be available for generating the request for registration, which may therefore viewed as anonymous.

In one or more embodiments, upon receipt of the request for registration, the registration server may determine whether the user input client identifier comprised in the request for registration corresponds or not to the client identifier (e.g. the HASH Id) that was transmitted to the first user input through the cookie data.

In a case where the registration server determines that the user input client identifier comprised in the request for registration corresponds to the client identifier (e.g. the HASH Id) that was transmitted to the first user input through the cookie data, the registration server may determine (50e") that the first user device is successfully registered. In some embodiments, the registration server may transmit a successful registration message to one or more of the first user device and the second user device.

In a case where the registration server determines that the user input client identifier comprised in the request for registration does not correspond to the client identifier (e.g. the HASH Id) that was transmitted to the first user input through the cookie data, the registration server may determine that the first user device is not successfully registered. In some embodiments, the registration server may transmit a registration failure message to one or more of the first user device and the second user device.

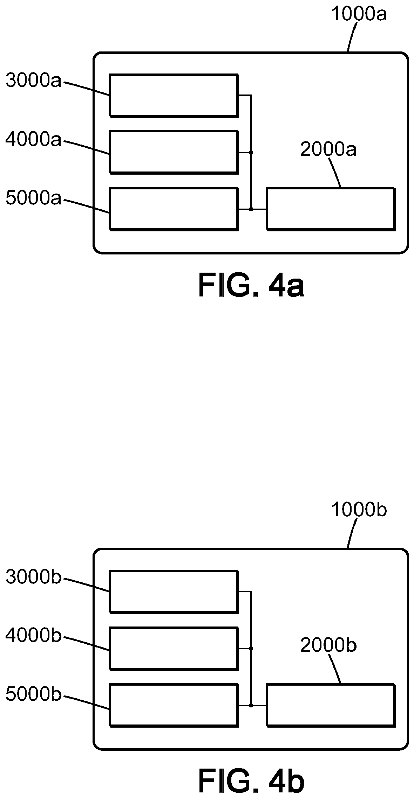

Fig. 4a illustrates an exemplary apparatus 1000a configured to use a registration feature in accordance with embodiments of the present subject disclosure. The apparatus 1000a may, depending on the embodiment, be comprised in a server node of a multimedia content distribution network, in a server platform which comprises one or more servers (which may be cloud-based), or in a DVB-I server unit of a server node of a multimedia content distribution network, or of a server platform.

The apparatus 1000a, which may comprise one or more computers, includes a control engine 2000a, a registration processing engine 3000a, a data interface engine 4000a, and a memory 5000a.

In the architecture illustrated on Fig. 4a, all of the registration processing engine 3000a, data interface engine 4000a, and memory 5000a are operatively coupled with one another through the control engine 2000a.

In one or more embodiments, the registration processing engine 3000a may be configured to perform various functions or embodiments provided in the present subject disclosure of the proposed method for registration with a server of a multimedia data delivery system as described herein, including with respect to receiving, from a first client configured on a first user device of the multimedia data delivery system, a request for multimedia data, the request comprising a network address of the first client; generating a client identifier based on data comprised in the received request; generating multimedia data through which the client identifier is obtainable by using the first user device through playing the multimedia data by a multimedia player configured on the first user device, and transmitting the multimedia data to the first user device; receiving, by the server, from a second client configured on a second user device, a request for registration with the server, wherein the request for registration comprises an acquired client identifier; and determining whether registration with the server is successful based on the client identifier and the acquired client identifier. In some embodiments, the registration processing engine 3000a may be implemented in software and incorporated in a computing machine running on a server device, for example in one or more of a DVB-I Service List Registry function and DVB-I Service List Server function implemented on a DVB-I server, configured according to embodiments of the present subject disclosure.

In some embodiments, the data interface engine 4000a is configured to receive as input data a request for multimedia data from one or more user devices of the multimedia data delivery system, and a request for registration with the server from one or more user devices.

The control engine 2000a includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 2000a may also comprise, or may be in communication with, computer storage media, such as, without limitation, the memory 5000a, capable of storing computer program instructions or software code that, when executed by the processor, causes the processor to perform the elements described herein. In addition, the memory 5000a may be any type of data storage computer storage medium, capable of storing multimedia content data, service data, service list data, customization data, personalization data and/or channel data for use according to one or more embodiments of the present subject disclosure, coupled to the control engine 2000a and operable with the data interface engine 4000a, and registration processing engine 3000a to facilitate management and processing of resource data stored in association therewith.

In embodiments of the present subject disclosure, the apparatus 1000a is configured for performing the registration methods described herein for a server device.

It will be appreciated that the apparatus 1000a shown and described with reference to Fig. 4a is provided by way of example only. Numerous other architectures, operating environments, and configurations are possible. Other embodiments of the node may include fewer or greater number of components, and may incorporate some or all of the functionality described with respect to the apparatus components shown in Fig. 4a. Accordingly, although the control engine 2000a, registration processing engine 3000a, data interface engine 4000a, and memory 5000a are illustrated as part of the apparatus 1000a, no restrictions are placed on the location and control of components 2000a - 5000a. In particular, in other embodiments, components 2000a - 5000a may be part of different entities or computing systems.

Fig. 4b illustrates an exemplary apparatus 1000b configured to use a registration feature in accordance with embodiments of the present subject disclosure. The apparatus 1000b may, depending on the embodiment, be comprised in a user device which may be a client node of a multimedia content distribution network (such as a television device), in a multimedia player or an application implemented on such user device, or in a DVB-I client implemented on a user device (e.g. on the player of a user device) of a multimedia content distribution network.

The apparatus 1000b, which may comprise one or more computers, includes a control engine 2000b, registration engine 3000b, a data interface engine 4000b, and a memory 5000b.

In the architecture illustrated on Fig. 4b, all of the query generation engine 3000b, data interface engine 4000b, and memory 5000b are operatively coupled with one another through the control engine 2000b.

In one or more embodiments, the registration engine 3000b may be configured to perform various functions or embodiments provided in the present subject disclosure of the proposed method for registration with a server of a multimedia data delivery system, the method comprising, by a user device of the multimedia data delivery system, transmitting, by a client configured on the user device, to the server, a request for multimedia data, the request comprising a network address of the client; receiving, by the client, from a server configured on the server device, data comprising a client identifier; receiving, by the client, from the server, multimedia data through which the client identifier is obtainable by using the user device through playing the multimedia data by a multimedia player configured on the user device; and playing, by the multimedia player configured on the user device, the multimedia data. In some embodiments, the registration engine 3000b may be implemented in software and incorporated in a computing machine running on a user device, for example in a DVB-I client implemented on a user device, configured according to embodiments of the present subject disclosure.

In some embodiments, the data interface engine 4000b is configured to transmit requests for multimedia data, generated by the registration engine 3000b to a server device, and to receive response messages in response to transmitted request messages.

The control engine 2000b includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 2000b may also comprise, or may be in communication with, computer storage media, such as, without limitation, the memory 5000b, capable of storing computer program instructions or software code that, when executed by the processor, causes the processor to perform the elements described herein. In addition, the memory 5000b may be any type of data storage computer storage medium, capable of storing multimedia content data, service data, service list data, customization data, personalization data and/or channel data for use according to one or more embodiments of the present subject disclosure, coupled to the control engine 2000b and operable with the data interface engine 4000b, and registration engine 3000b to facilitate management and processing of resource data stored in association therewith.

In embodiments of the present subject disclosure, the apparatus 1000b is configured for performing the registration methods described herein for a user device.

It will be appreciated that the apparatus 1000b shown and described with reference to Fig. 4b is provided by way of example only. Numerous other architectures, operating environments, and configurations are possible. Other embodiments of the node may include fewer or greater number of components, and may incorporate some or all of the functionality described with respect to the apparatus components shown in Fig. 4b. Accordingly, although the control engine 2000b, registration engine 3000b, data interface engine 4000b, and memory 5000b are illustrated as part of the apparatus 1000b, no restrictions are placed on the location and control of components 2000b - 5000b. In particular, in other embodiments, components 2000b - 5000b may be part of different entities or computing systems.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A method for registration with a server of a multimedia data delivery system, the method comprising, by the server:
receiving, from a first client configured on a first user device of the multimedia data delivery system, a request for multimedia data, the request comprising a network address of the first client;
generating a client identifier based on data comprised in the received request;
generating multimedia data through which the client identifier is obtainable by using the first user device through playing the multimedia data by a multimedia player configured on the first user device, and transmitting the multimedia data to the first user device;
receiving, by the server, from a second client configured on a second user device, a request for registration with the server, wherein the request for registration comprises an acquired client identifier; and
determining whether registration with the server is successful based on the client identifier and the acquired client identifier.

2. The method according to claim 1, wherein the server is configured to use the HyperText Transfer Protocol, HTTP, protocol, the method further comprising: generating a cookie that includes the client identifier, and transmitting the cookie to the first client.

3. The method according to claim 2, further comprising: transmitting, to the client, a command for recording the cookie data in a memory of the first user device.

4. The method according to any of the preceding claims, further comprising:
upon receiving the request for registration, determining whether the acquired client identifier comprised in the request for registration corresponds to the client identifier; and
upon determining that the acquired client identifier comprised in the request for registration corresponds to the client identifier, storing in a memory registration data related to the first client, the registration data comprising the client identifier or the acquired client identifier.

5. The method according to any of the preceding claims, wherein generating the client identifier comprises: generating a hash code encrypting an identifier of the first client and the network address of the first client, wherein the client identifier comprises the generated hash code.

6. The method according to any of the preceding claims, further comprising: upon determining that registration with the server is successful, transmitting, to the first client, a response message which includes a list of multimedia services customized based on the client identifier.

7. A method for registration with a server of a multimedia data delivery system, the method comprising, by a user device of the multimedia data delivery system,
transmitting, by a client configured on the user device, to the server, a request for multimedia data, the request comprising a network address of the client;
receiving, by the client, from a server configured on the server device, data comprising a client identifier;
receiving, by the client, from the server, multimedia data through which the client identifier is obtainable by using the user device through playing the multimedia data by a multimedia player configured on the user device; and
playing, by the multimedia player configured on the user device, the multimedia data.

8. The method according to any of the preceding claims, wherein the multimedia data further comprises registration data for accessing the server for registration with the server.

9. The method according to claim 8, wherein the registration data comprise one or more of a network address of the server and a Quick Response, QR, code encoding the network address of the server.

10. The method according to any of the preceding claims, wherein the client identifier is based on an identifier in the multimedia data delivery system and a network address comprised in the request for multimedia data.

11. The method according to any of the preceding claims, wherein the multimedia data comprises one or more of an image or a video which, when displayed on a display, shows the client identifier or a Quick Response, QR, code encoding the client identifier.

12. The method of any of the preceding claims, wherein the multimedia data delivery system includes a Digital Video Broadcasting - Internet, DVB-I, system.

13. The method of any of the preceding claims, wherein the first client is a Digital Video Broadcasting - Internet, DVB-I, client, and the server is a DVB-I server.

14. An apparatus, the apparatus comprising a processor and a memory operatively coupled to the processor, wherein the apparatus is configured to perform a method according to any of claims 1 to 14.

15. A computer program product comprising computer program code tangibly embodied in a computer readable medium, said computer program code comprising instructions to, when provided to a computer system and executed, cause said computer to perform a method according to any of claims 1 to 14.
